Europäisches Patentamt

European Patent Office

Office européen des brevets

(11) Publication number: **0 106 613**
**B1**

(12) **EUROPEAN PATENT SPECIFICATION**

(45) Date of publication of patent specification: **06.12.89**

(21) Application number: **83305972.8**

(22) Date of filing: **30.09.83**

(51) Int. Cl.⁴: **G 01 G 13/18**

(54) **Hopper for an automatic weighing apparatus.**

(30) Priority: **01.10.82 JP 149837/82**
**01.10.82 JP 149838/82**
**09.10.82 JP 153624/82**

(43) Date of publication of application:
**25.04.84 Bulletin 84/17**

(45) Publication of the grant of the patent:
**06.12.89 Bulletin 89/49**

(84) Designated Contracting States:
**DE FR GB IT**

(56) References cited:
**EP-A-0 072 707**
**EP-A-0 075 479**
**EP-A-0 125 902**
**GB-A- 161 301**
**GB-A-2 128 173**
**JP-U-50 149 059**

(73) Proprietor: **KABUSHIKI KAISHA ISHIDA KOKI
SEISAKUSHO**
**44, Shogoin Sannou-cho Sakyo-ku
Kyoto-shi Kyoto 606 (JP)**

(72) Inventor: **Ueda, Kenji**
**2-1-1, Ohe Minamifukunishi-cho
Nishigyo-ku Kyoto-shi Kyoto (JP)**

(74) Representative: **Fane, Christopher Robin King
et al**
**HASELTINE LAKE & CO. Hazlitt House 28
Southampton Buildings Chancery Lane
London, WC2A 1AT (GB)**

Courier Press, Leamington Spa, England.

## Description

The present invention relates to a hopper for use in automatic weighing apparatus.

Automatic weighing apparatus for performing combinatorial weighing is known which employs a plurality of weighing machines, arrayed in a circle, to which batches of articles to be weighed are supplied. Batch weight measures provided by those weighing machines are supplied to a combination computing unit which combines those batch weight measures to select an "optimum" combination of weighing machines holding a total combined weight of articles equal or closest to a predetermined target weight, whereupon the articles held by the weighing machines making up the selected combination are discharged to form an output batch having the said target weight. Each of the weighing machines is equipped with a weighing hopper, for holding a batch of articles, and a pool hopper disposed above the weighing hopper, for enabling a fresh batch of articles to be supplied to the weighing hopper when it has been emptied.

Hoppers used in automatic weighing apparatus of the type described are known from EP—A—0,075,479 (published 30 March, 1983). In EP—A—0,075,479 each of the hoppers has a gate for opening and closing an article discharge port thereof and a link mechanism operable, under the control of an external source, to open and close the gate. Each hopper also has an attachment mechanism by means of which it may be attached to a corresponding weighing machine. Such known hoppers have the disadvantage that they are undesirably complex in structure, highly costly to construct, and comparatively heavy.

Automatic weighing apparatus such as described above is normally used in combination with a packaging apparatus which receives articles discharged by means of a collection chute from the weighing hoppers of the selected weighing machines. For an increased article handling capability, the automatic weighing apparatus is controlled in such a manner as to enable the weighing hoppers to discharge the weighed articles into the collection chute and also to enable the pool hoppers to discharge fresh batches of articles into those emptied weighing hoppers substantially at the same time, thereby to reduce any time loss between weighing operations. Alternatively, each of the weighing hoppers is provided with two gates, and the collection chute comprises an outer chute for receiving articles discharged from one of the gates of the weighing hopper and an inner chute for receiving articles discharged from the other gate thereof. The two gates of each weighing hopper are alternately opened and closed to discharge the articles alternately into the inner and outer collection chutes, thereby to increase the discharging rate of the weighing apparatus.

The two gates on each prior art weighing hopper are coupled with respective link mechanisms for opening and closing the gates, the known link mechanisms being mounted independently on opposite outer side surfaces of a hopper body. This arrangement results in an increased hopper width or an increased space taken up by each hopper. The hoppers are therefore widely spaced from one another, with the consequence that an automatic weighing apparatus having circularly-arrayed weighing machines is large in overall size, or that the number of weighing machines in the apparatus must be limited, which restricts efforts to improve combinatorial weighing accuracy.

In an automatic combinatorial weighing apparatus of the type described above, the pool hoppers are removably attached to the weighing machines, or removably installed in other attachment positions, for cleaning purposes.

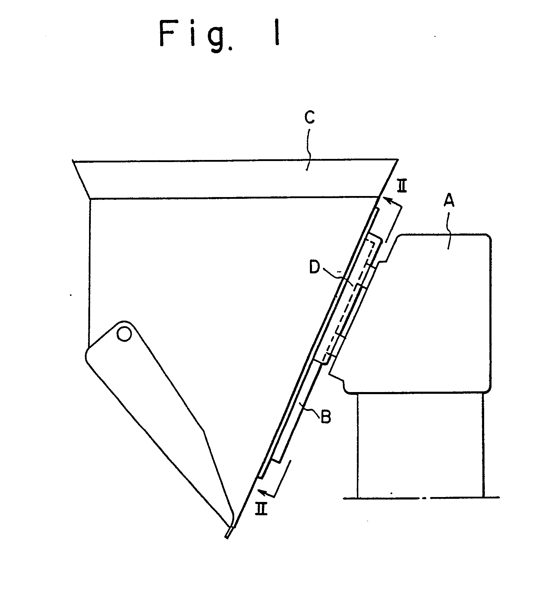

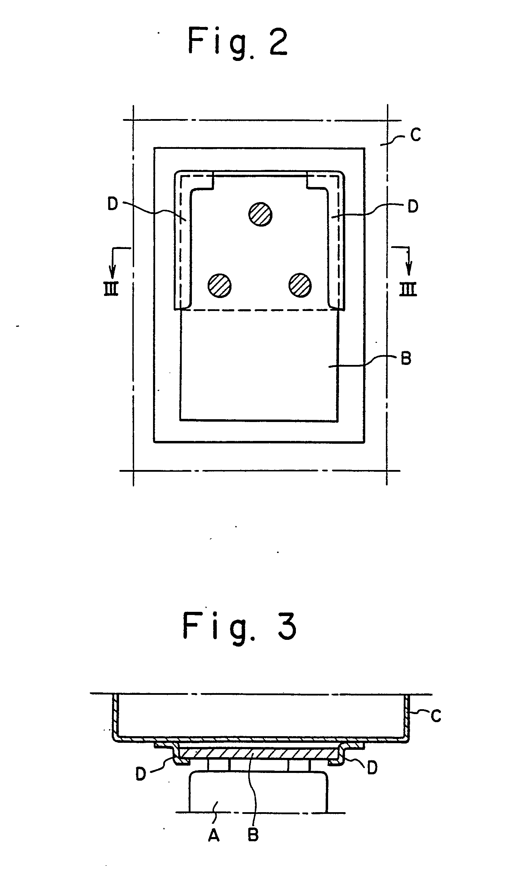

Figs. 1 through 3 of the accompanying drawings show a general prior hopper attachment construction by way of example. An attachment plate B is fixed to a mount structure A, such as a weighing machine, and a pair of guide members D each having an L-shaped cross-section are mounted on a hopper C. The hopper C is installed on the mount structure A by inserting the attachment plate B between the guide members D. The manufacture of such components is tedious and time-consuming, since the back surfaces of the attachment plate B and the hopper C held in contact therewith, and the inner surfaces of the guide members D, should be finished to a required accuracy of parallelism and flatness. Any gap or backlash between the attachment plate B and the guide members D would cause the hopper to vibrate or wobble owing to vibrations of the apparatus and shocks imposed when the gate is opened and closed. Vibrations or wobbling movements of the weighing hoppers attached to the weighing machines would adversely affect the latter, resulting in a reduced degree of weighing accuracy.

In view of the afore-mentioned disadvantages of the prior art, it is desirable to provide a link mechanism for opening and closing a hopper gate which can allow a hopper to be lighter, more compact, less complex, and less expensive to make than prior art hoppers.

It is also desirable to provide attachment means for a hopper having such a link mechanism which can allow the hopper to be less expensive to make whilst avoiding the above-mentioned problems which can result from undesirable vibration of the hopper.

According to the present invention there is provided a hopper for use in automatic weighing apparatus, which hopper is provided with a gate, pivotably attached to a body of the hopper for movement between first and second dispositions in which the gate respectively closes and opens a discharge port of the hopper body, and with a link mechanism operable to move the gate from its first disposition to its second disposition, which link mechanism comprises: a drive link pivotably mounted on a bracket of the hopper, which bracket projects from the hopper body to serve for mounting the hopper on a support device, so that the pivotal axis of the drive link is spaced from the hopper body; and also comprises a follower link fixed at one end portion thereof to the said gate so as to be movable therewith, and having an opposite end portion pivotably connected to one end portion of an intermediate link having an opposite end portion pivotably connected to a part of the said drive link that is spaced from the said pivotal axis of that drive link; the arrangement of the links being such that when the said gate is in its first disposition the direction in which the said one end portion of the intermediate link is spaced from its said opposite end portion is the same as that in which the said part of the drive link is spaced from the said pivotal axis of that drive link; and the said gate being movable then to its said second disposition by application of an actuating force to the said drive link to rotate the said drive link about its said pivotal axis against the action of resilient retention means effective between the hopper body and the said drive link.

Reference will now be made, by way of example, to the accompanying drawings, in which:

Fig. 1 (described above) shows a side elevational view of a known hopper attachment construction;

Fig. 2 shows a cross-sectional view taken along line II — II of Fig. I;

Fig. 3 shows a cross-sectional view taken along line III — III of Fig. 2;

Fig. 4 shows a vertical cross-sectional view of automatic weighing apparatus;

Fig. 5 shows a side elevational view of a hopper embodying the present invention;

Fig. 6 shows a plan view of the hopper shown in Fig 5;

Fig. 7 shows a fragmentary vertical cross-sectional view taken along line IV — IV of Fig. 6;

Fig. 8 shows a side elevational view of a hopper and the way in which it may be attached to weighing apparatus;

Fig. 9 shows a front elevational view of a double-wing hopper embodying the present invention;

Fig. 10 shows a plan view of the double-wing hopper illustrated in Fig. 9;

Fig. 11 shows a side elevational view, partly in cross-section, of the doule-wing hopper of Fig. 9;

Figs. 12 and 13 show further side elevational views of the double-wing hopper of Fig. 9;

Fig. 14 shows a plan view of a portion of apparatus embodying the present invention;

Fig. 15 shows a vertical cross-sectional view taken along line VI — VI of Fig. 14;

Fig. 16 shows a plan view of a portion of apparatus embodying the present invention; and

Fig. 17 shows a vertical cross-sectional view taken along line VIII—VIII of Fig. 16.

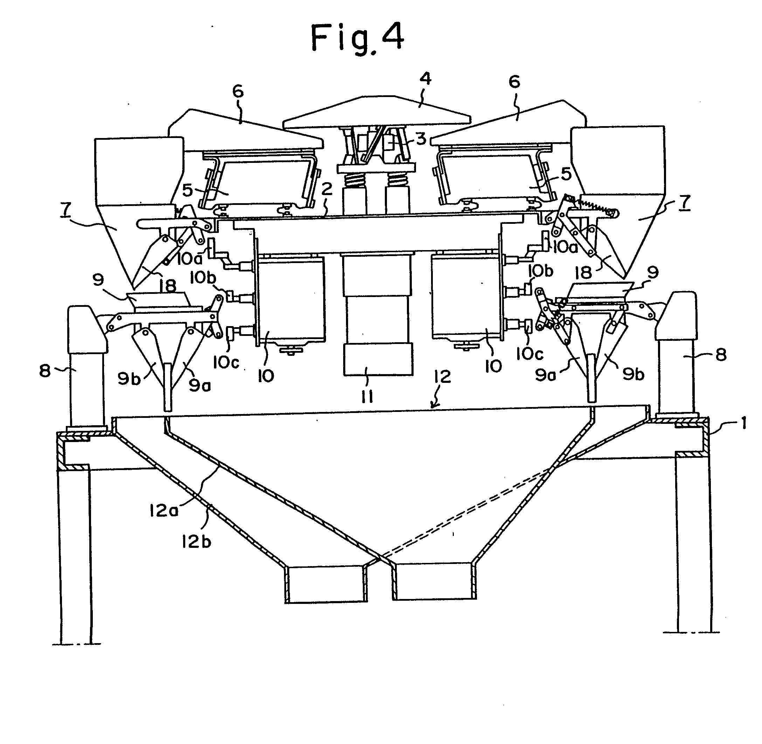

The automatic weighing apparatus shown in Fig. 4 comprises: a base 1; a support table 2 mounted on and positioned above the base 1; an article dispersion table 4 supported centrally on the support table 2 by a vibrator unit 3; a plurality of supply troughs 6 disposed radially around the article dispersion table 4 and supported respectively by vibrator units 5 on the support table 2; and a plurality of pool hoppers 7 mounted on the peripheral edge of the support table 2 and equal in number to the supply troughs 6, the pool hoppers 7 being positioned below the respective radially outward edges of the supply troughs 6. The automatic weighing apparatus also includes a plurality of weighing machines 8 mounted on the base 1 in a circular array, in radial alignment with the supply troughs 6 or pool hoppers 7, respectively, and a plurality of weighing hoppers 9 attached respectively to the weighing machines 8 and located below the pool hoppers 7, respectively. A plurality of driver units 10 depend from a lower surface of the support table 2. The driver units 10 are actuable, by a motor 11' mounted on the lower surface of the support table 2, to cause the pool hoppers 7 and the weighing hoppers 9 to discharge articles therefrom in response to article discharge commands. A collection chute 12 is mounted on the base 1 below the weighing hoppers 9 and has a wide upper opening for receiving the articles discharged from the weighing hoppers 9. Each of the weighing hoppers 9 is of the double-wing type having two gates 9a, 9b. Therefore, the collection chute 12 is composed of an inner chute 12a for receiving the articles discharged from the gate 9a of each weighing hopper 9 and an outer gate 12b for receiving the articles discharged from the gate 9b of each weighing hopper 9.

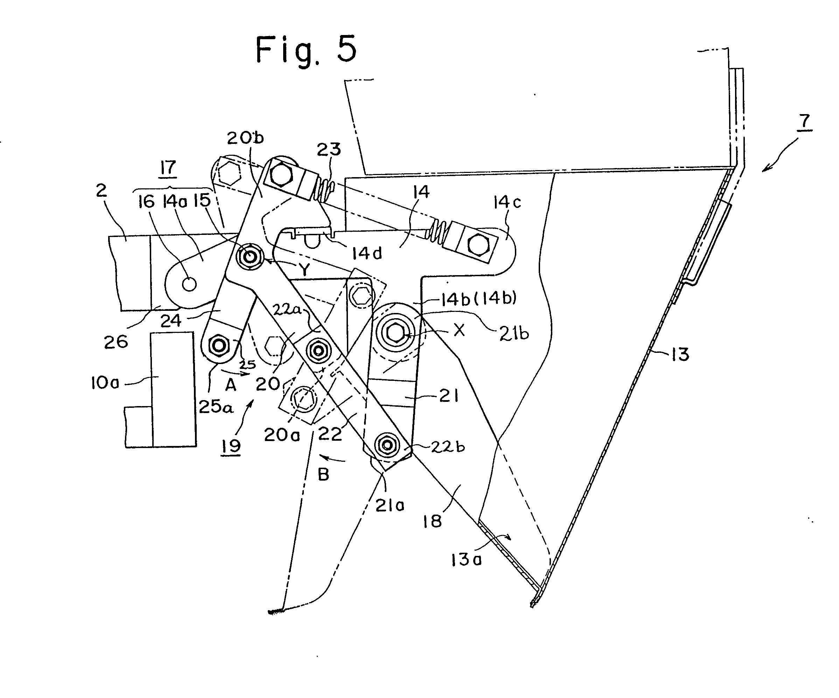

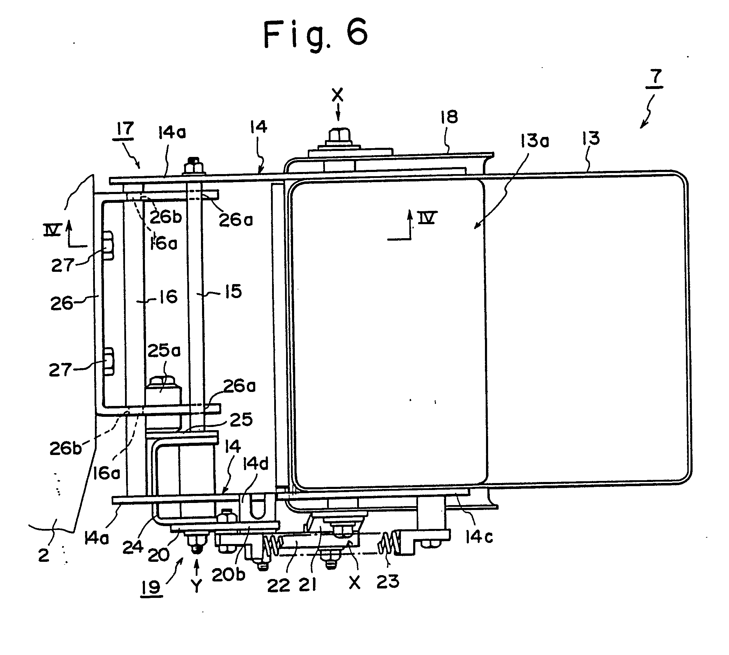

The construction of each of the pool hoppers 7 will be described in detail with reference to Figs. 5 and 6. The pool hopper 7 comprises a body 13, having an upper opening and a lower article discharge port 13a, a pair of T-shaped brackets 14, fixed to respective sides of the body 13 and having projections 14a extending laterally (to the left as shown) from the body 13, and two parallel shafts 15, 16, extending between the projections 14a and positioned out of horizontal alignment in differently spaced relationship to the body 13. The projections 14a and the shafts 15, 16 jointly constitute an attachment mechanism 17 for the pool hopper 7. A gate 18 for opening and closing the article discharge port 13a is swingably supported on respective lower projecting ends 14b of the brackets 14. The gate 18 can be opened and closed by a link mechanism 19 comprising a drive link 20, pivotably supported on one of the projections 14a of the brackets 14 at a pivot point Y, a follower link 21 fixed at one end 21b thereof to the gate 18 so as to be movable therewith about a pivot X, and an intermediate link 22 having one end 22b thereof connected to the opposite end 21a of the follower link 21 and having its other end 22a connected to an end 20a of the drive link 20 that is spaced from the pivot Y. The drive link 20 includes an extension 20b extending away from the end 20a thereof beyond the pivot Y of the drive link 20. A return spring 23 is coupled between the extension 20b and a projection 14c of the bracket 14 which extends away from the drive link 20. The bracket 14 has a stopper 14d for stopping the angular movement caused by the spring 23 of the drive link 20 at a fixed position upon engagement with the extension 20b. An actuation lever 25 is fixed to the drive link 20 via a channel-shaped connector 24 extending around the projection 14a of the bracket 14 and has an actuable end 25a disposed in the vicinity of, or in confronting relation to, a pusher member 10a (Fig. 4) of the corresponding driver unit 10. When the extension 20b of the drive link 20 is held in abutment against the stopper 14d, the gate 18 closes the discharge port 13a of the body 13, and the drive link 20 and the intermediate link 22 are substantially aligned with each other to form a sort of toggle mechanism. In the illustrated embodiment, the drive link 20, the connector 24 and the actuation lever 25 fixed thereto are supported on the shaft 15 which is closer than the shaft 16 to the body 13, the shaft 15 serving as the pivot Y for the angular movement of the drive link 20, the connector 24 and the actuation lever 25. As shown in Figs. 5 and 6, a channel-shaped attachment member 26 is fastened, by bolts 27, to an attachment (the peripheral edge of the support table 2) for the pool hopper 7. The attachment member 26 has, on two opposing sides thereof, upwardly opening recesses 26a, for receiving the shaft 15, and downwardly opening recesses 26b, for receiving the shaft 16. The shaft 16 has smaller-diameter portions 16a engageable respectively in the recesses 26b so that the shaft 16 will not be displaced laterally when the pool hopper 7 is mounted on the attachment member 26.

Operation of the automatic weighing apparatus of the foregoing construction is as follows: articles are dispersively supplied from the dispersion table 4 through the supply troughs 6 and the pool hoppers 7 as batches into the weighing hoppers 9, and then weighed respectively by the weighing hoppers 9. An "optimum" combination of measured weights is selected for achieving a desired total weight. The selected articles which have been weighed are discharged from the weighing hoppers 9 into the inner chute 12a or outer chute 12b of the collection chute 12 when either the gate 9a or the gate 9b of the selected weighing hoppers 9 is opened by projecting movement of a pusher member 10b or a pusher member 10c of the corresponding driver unit 10. The discharged articles are collected by the selected chute, and then supplied to a packaging apparatus (not shown) disposed below the collection chute. A pusher member 10a of the driver unit 10 is pushed towards each of the weighing hoppers 9 from which the articles have been discharged, thereby opening the gate 18 of the corresponding pool hopper 7 positioned above the weighing hopper. A fresh batch of articles to be weighed is immediately supplied from the pool hopper 7 to the corresponding emptied weighing hopper 9 in preparation for a next cycle of weighing operation.

When the pusher member 10a of the driver unit 10 is pushed against the actuable end 25a of the actuation lever 25, the connector 24 and the drive link 20 are rotated in unison in the direction of the arrow A, against the force of the return spring 23, into the position shown by the two-dot-and-dash lines in Fig 5. The turning movement of the drive link 20 causes the intermediate link 22 to turn the follower link 21 in the direction of the arrow B, whereupon the gate 18 as it turns with the follower link 21 opens the discharge port 13a of the body 13. As the pusher member 10a of the driver unit 10 is retracted, the links 20, 21, 22 are rotated to the solid-line position of Fig. 5 under the tension of the return spring 23, thereby closing the discharge port 13a. With the gate 18 closed, the drive link 20 and the intermediate link 22 are positioned relatively to each other in a so-called dead point. Accordingly, the gate 18 remains closed even when it is subjected to the weight of supplied articles or to a shock at the time articles are charged into the pool hopper 7.

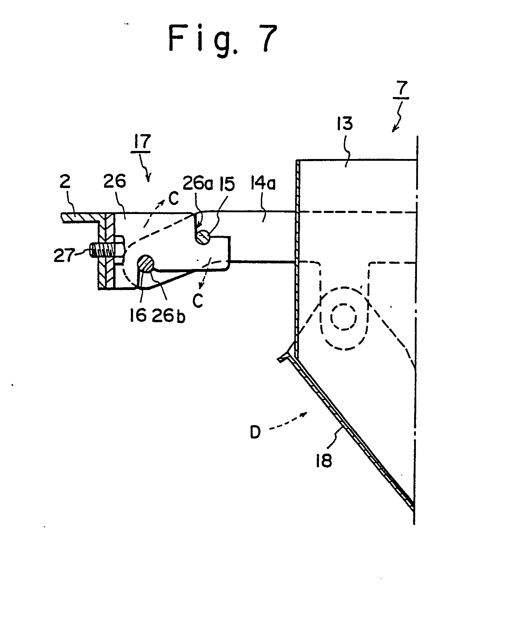

As mentioned above, the pool hopper 7 is supported on the attachment member 26 affixed to the peripheral edge of the support table 2 by means of the attachment mechanism 17, comprising the shafts 15, 16 extending between the projections 14a of the brackets 14. A moment exerted in the direction of the arrows C, C (Fig. 7) by the weight of the pool hopper 7 and the weight of the articles contained therein is borne by the attachment member 26 with the shafts 15, 16 received in the upwardly opening recesses 26a and the downwardly opening recesses 26b respectively. Thus, the pool hopper 7 can be supported firmly by means of the above-described simple construction, against vibrations or wobbling movements, unless an external moment greater than the above-mentioned moment is applied in the direction opposite to that of the arrows C. The pool hopper 7 can nevertheless be detached with facilty simply by tilting the pool hopper 7 in the direction of the arrow D.

In the hopper of Fig. 5, the drive link 20 in the gate opening and closing link mechanism 19 is supported on one of the brackets 14 which constitute part of the attachment mechanism 17, for pivotable movement about one of the shafts 15, 16 extending between the brackets 14. In other words, the attachment mechanism 17 and the link mechanism 19 share one of the brackets 14 and one of the shafts 15, thereby simplifying the construction of a pool hopper 7 equipped with such mechanisms 17, 19.

Although the hopper shown in Figs. 5 to 7 has been described as a pool hopper, it should be clear that the present invention is equally applicable (with the same construction as described above) to weighing hoppers.

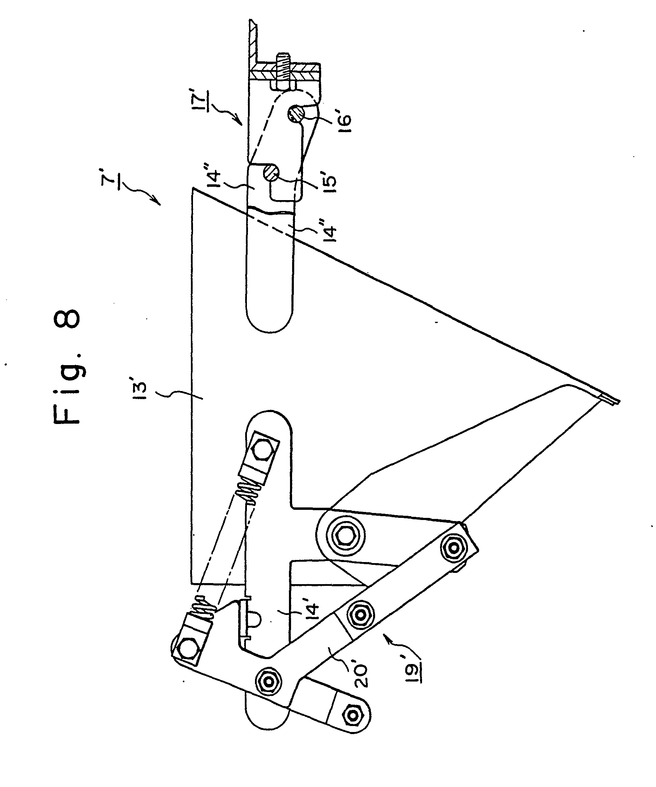

Fig. 8 illustrates an attachment mechanism for a hopper in which the gate opening and closing link mechanism and the attachment mechanism are mounted on opposite sides, respectively, of the hopper body. The hopper accordingly does not embody the present invention. In Fig. 8, a drive link 20' of a gate opening and closing link mechanism 19' is pivotably supported on a bracket 14', projecting from one side of a body 14' of a hopper 7', and an attachment mechanism 17', comprising a pair of brackets 14" and two shafts 15', 16' extending therebetween, is mounted on an opposite side of the body 13'.

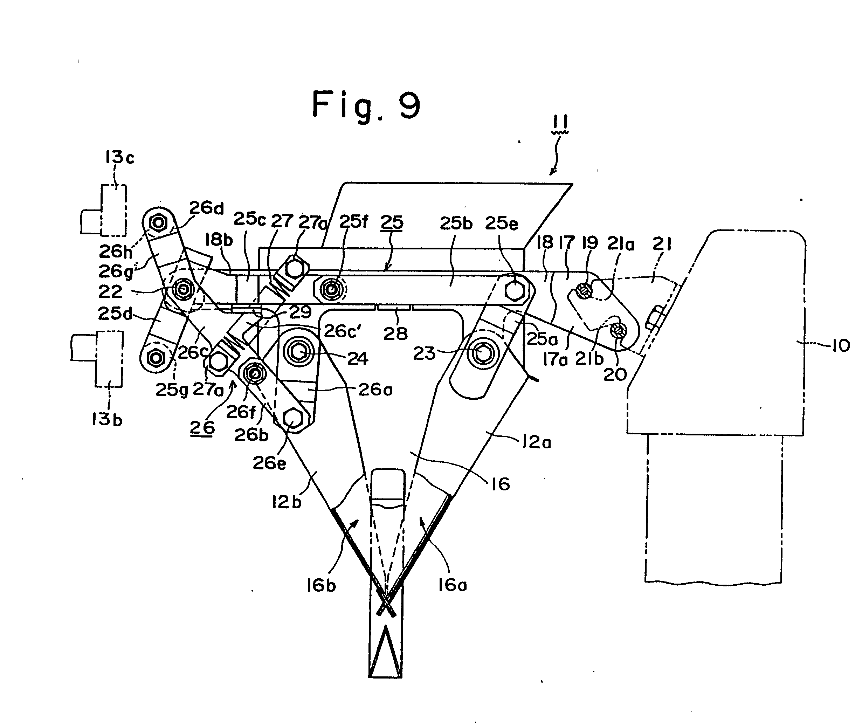

A double-wing weighing hopper embodying the present invention will now be described with reference to Figs. 9 through 13 (in which the reference numerals do not correspond to those used in Figs. 4 to 8). The weighing hopper, generally designated at 11, has a hopper body 16 in the form of an inverted pyramid having an upper opening and a pair of lower article discharge ports 16a, 16b. A pair of brackets 17, 18 are fixed respectively to opposite sides of the hopper body 16 and have respective ends 17a, 18a extending to one side (the right as shown) of the hopper body 16. Two locking shafts 19, 20 are mounted on and between the ends 17a, 18a and positioned out of horizontal alignment with one another at different distances from the hopper body 16. The weighing hopper 11 is·supported on a weighing machine 10 by means of the shafts 19, 20 which engage respectively in upwardly opening recesses 21a and downwardly opening recesses 21b defined in a support member 21 secured to the weighing machine 10. The brackets 17, 18 also have respective ends 17b, 18b projecting from the other side (the left) of the hopper body 16 and supporting a support shaft 22 of a gate opening and closing link mechanism (described later on).

As illustrated in Fig. 9, the gates 12a, 12b are attached so that they will close the respective article discharge ports 16a, 16b. The gates 12a, 12b have upper ends supported by respective pivot shafts 23, 24 on the brackets 17, 18 and are swingably openable outwardly about those pivot shafts 23, 24, respectively. Link mechanisms 25, 26 for opening and closing the gates 12a, 12b, respectively, are mounted on the same outer side surface of the hopper body 16 as that on which the bracket 18 is located, the link mechanisms 25, 26 being vertically displaced from each other.

The link mechanism 25 for opening and closing the gate 12a comprises a follower link 25a swingably movable with the gate 12a about the pivot shaft 23, an intermediate link 25b extending substantially parallel to the bracket 18 outwardly thereof, a drive link 25c supported on the support shaft 22, and an actuation lever 25d supported on the support shaft 22. The follower link 25a has an upper end coupled by a pin 25e to one end of the intermediate link 25b, the other end of which intermediate link is coupled by a pin 25f to one end of the drive link 25c. The drive link 25c and the actuation lever 25d are fixed to each other, and are rotatable about the support shaft 22. The actuation lever 25d supports at one end thereof a pusher bearing roller 25g mounted by a shaft thereon. The link mechanism 26 for opening and closing the gate 12b comprises a follower link 26a swingably moveable with the gate 12b about the pivot shaft 24, an intermediate link 26b positioned on an oblique imaginary line interconnecting a lower end of the follower link 26a and the support shaft 22, a drive link 26c supported on the support shaft 22, and an actuation lever 26d supported on the support shaft 22. The lower end of the follower link 26a is coupled by a pin 26e to one end of the intermediate link 26b, the other end of which intermediate link is coupled by a pin 26f to an end of the drive link 26c. The drive link 26c and the actuation lever 26d are fixed to each other through a connector 26g for swingable movement about the support shaft 22. The actuation lever 26d supports at one end thereof a pusher bearing roller 26h mounted by a shaft thereon. Between the link mechanisms 25, 26, there is disposed a tension spring 27 which is connected by spring holders 27a to drive links 25c, 26c. The gates 12a, 12b are normally urged by the return spring 27 in a direction such as to close the article discharge ports 16a, 16b.

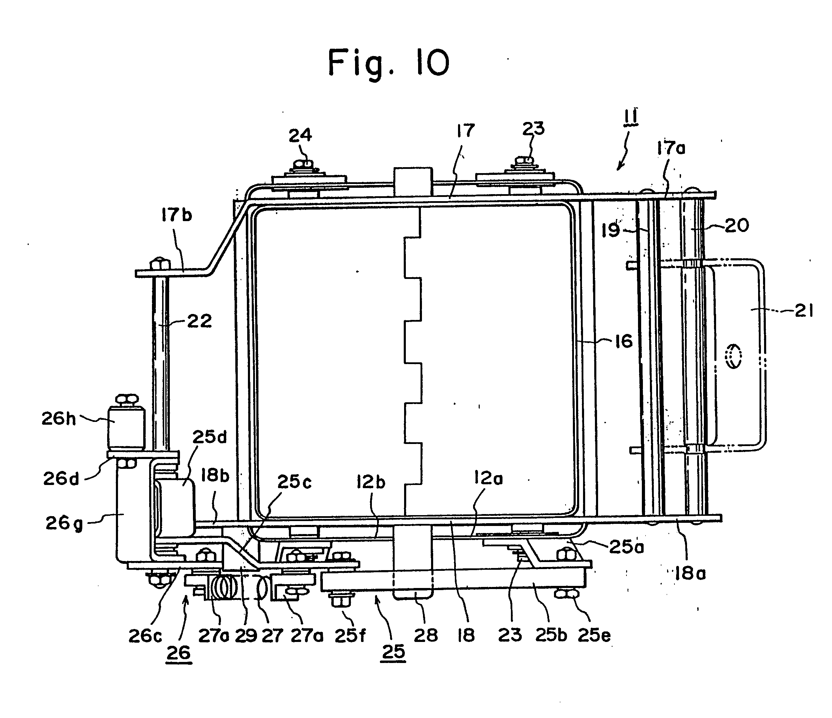

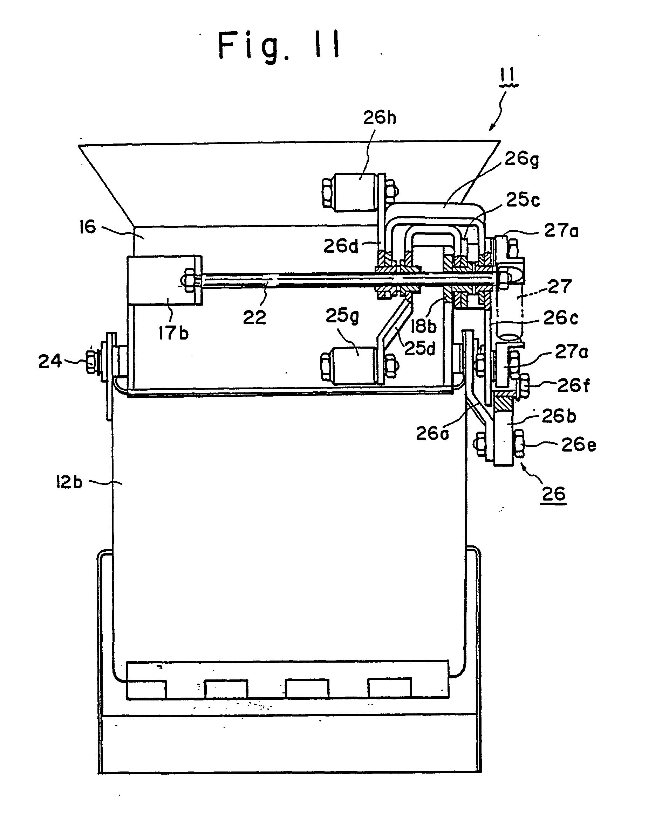

As shown in Figs. 9 and 10, the intermediate link 25b is held in abutment against a stopper 28 under the force of the spring 27 when the gate 12a, is in its closed position. A projection 26c' on the drive link 26c is held in abutment against a stopper 29 under the force of the spring 27 when the gate 12b is in its closed position. The stoppers 28, 29 are mounted on the bracket 18 for limiting the position of the link mechanism 25, 26 while the gates are closed. As shown in Fig. 11, the actuation lever 25d and the connector 26g secured respectively to the drive links 25c, 26c of the link mechanisms 25, 26 are channel-shaped and supported in two positions on the support shaft 22. The pusher bearing rollers 25g, 26h mounted on the ends of the actuation levers 25d, 26d are vertically aligned with each other laterally of the hopper body 16.

Operation of the weighing hopper 11 thus constructed will now be described with reference to Figs. 9 through 13. Articles are dispersively supplied from a dispersion table, via supply troughs and pool hoppers, as batches into the weighing hoppers 11, and then weighed respectively by the weighing hoppers 11. An "optimum" combination of measured weights is selected for achieving a desired total weight. The selected articles which have been weighed are discharged from the weighing hoppers 11 into an inner chute or an outer chute of a collection chute when either the gate 12a or the gate 12b of each of the selected weighing hoppers 11 is opened by projecting movement of a pusher member 13b or a pusher member 13c of a corresponding driver unit 10. The discharged articles are collected by the selected chute, and then supplied to a packaging apparatus (not shown) disposed below the collection chute. A pusher member of the driver unit projects toward each of the weighing hoppers 11 from which the articles have been discharged, thereby causing a link mechanism to open the gate of a corresponding pool hopper positioned above the weighing hopper. A fresh batch of articles is immediately supplied from the pool hopper to the corresponding emptied weighing machine in preparation for a next cycle of weighing operation.

During such a weighing and discharging operation of article batches contained in the weighing hoppers, the link mechanisms 25, 26 on the weighing hopper 11 are biased under the force of the return spring 27 acting on the drive links 25c, 26c to keep the gates 12a, 12b closed over the article discharge ports 16a, 16b as illustrated in Fig. 9. At this time, the intermediate link 25b and drive link 25c of the link mechanism are positioned on a horizontal straight line connecting the support shaft 22 and the pin 25e, and the intermediate link 26b and drive link 26c of the link mechanism 26 are also positioned in a straight line connecting the support shaft 22 and the pin 26e. Therefore, these links are in their respective dead-point positions, preventing the gates 12a, 12b from being opened under the weight of the articles contained in the weighing hopper 11.

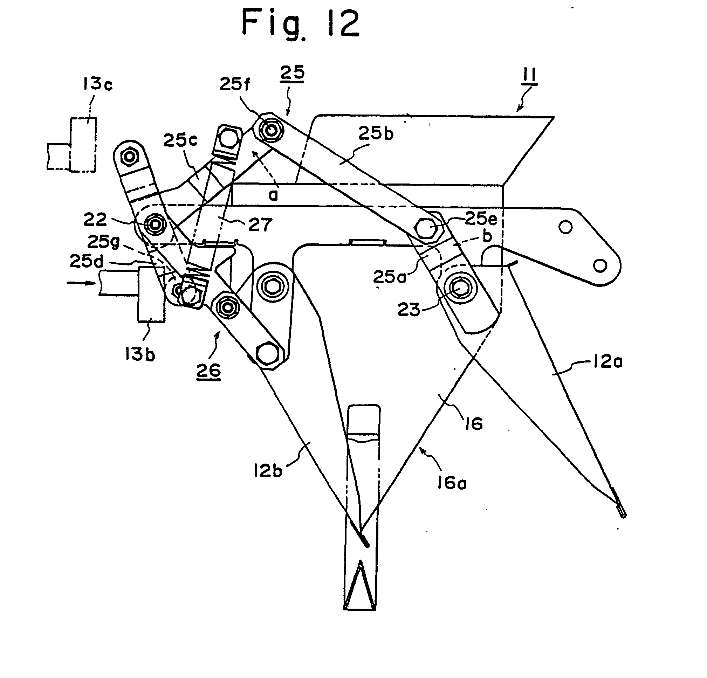

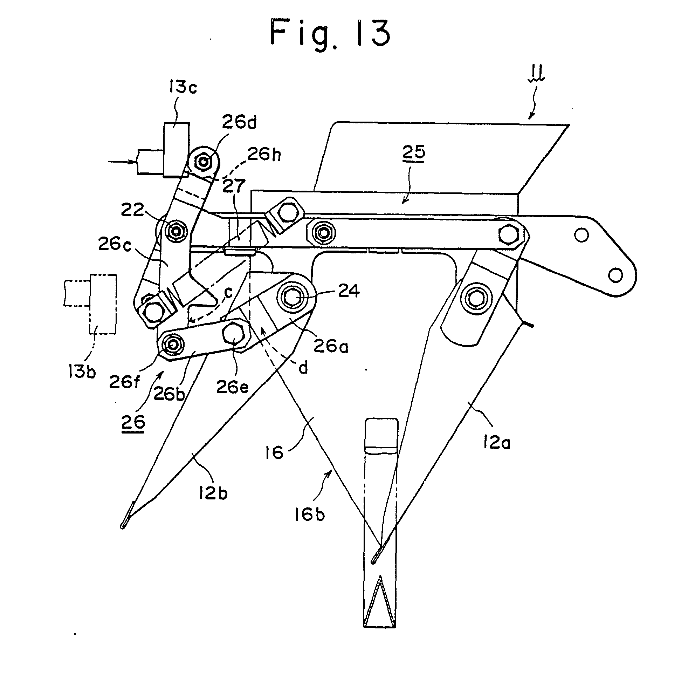

When the pusher member 13b of the driver unit is pushed forwards, the pusher bearing roller 25g of the link mechanism 25 is pushed thereby to turn the actuation lever 25d and the drive link 25c counterclockwise (i.e. in the direction of the arrow in Fig. 12) about the support shaft 22, whereupon the drive link 25c and the intermediate link 25b are lifted out of horizontal alignment, pushing up the pin 25f. The intermediate link 25b is pulled upwardly towards the left, and the follower link 25a is also turned to the left in the direction of the arrow b, thereby causing the gate 12a to turn outwardly about the pivot shaft 23. The article discharge port 16a is thus opened. When the pusher member 13b is retracted after the articles have been discharged, the gate 12a quickly closes the article discharge port 16a under the resilient force of the return spring 27. When the other pusher 13c of the driver unit is projected to push the pusher bearing roller 26h of the link mechanism 26, the actuation lever 26d and the drive link 26c are turned clockwise in the direction of the arrow c (Fig. 13) about the support shaft 22. The drive link 26c and the intermediate link 26b are lifted out of alignment to move the pin 26f to the left as shown. The intermediate link 26a is also turned to the left in the direction of the arrow d, thereby causing the gate 12b to turn outwardly about the pivot shaft 24. The article discharge port 16b is thus opened. When the pusher member 13c is retracted after the articles have been discharged, the gate 12b quickly closes the article discharge port 16b under the resilient force of the return spring 27. The gates 12a, 12b may thus be opened and closed alternately to supply the weighed articles to the packaging apparatus at short time intervals through the outer and inner chutes of the collection chute.

It will be clear that an embodiment of the present invention could equally well be applied to a pool hopper having two gates which are to be alternately closed and opened.

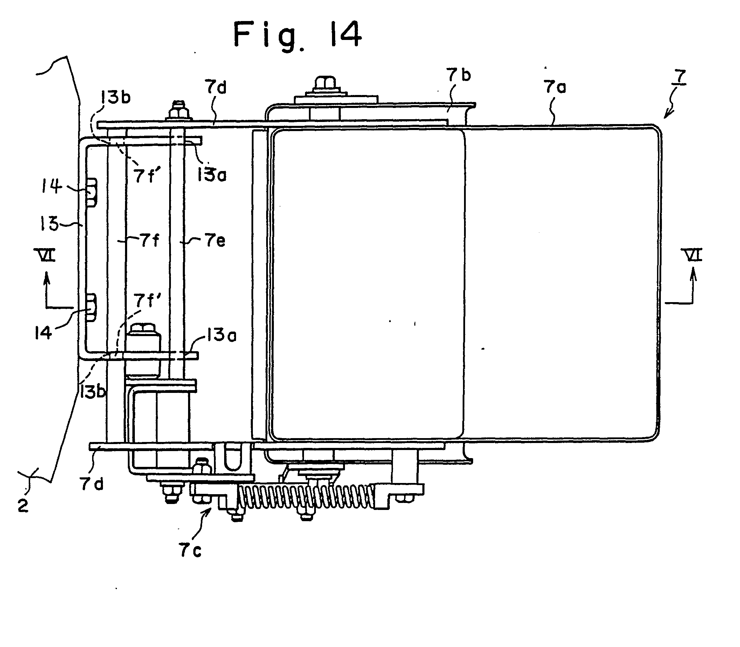

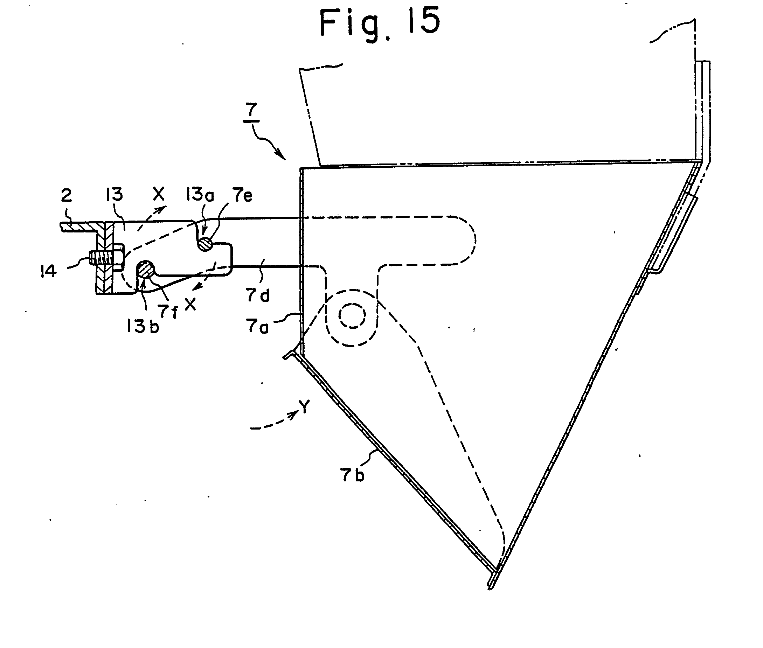

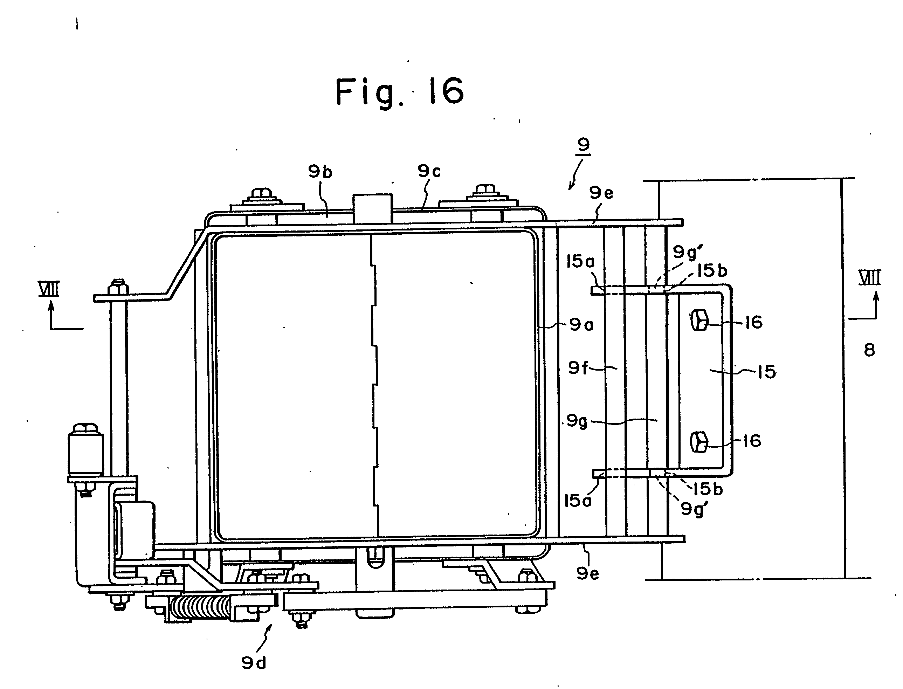

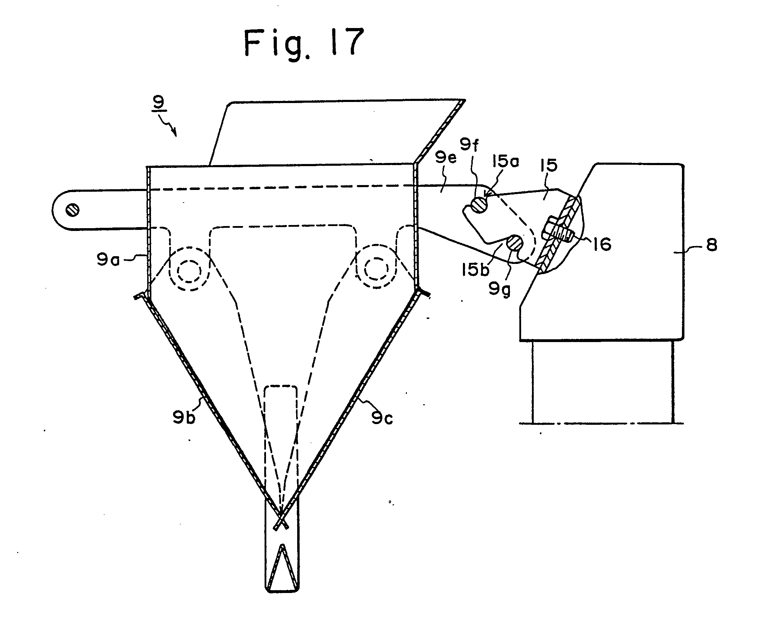

Attachment means for use with a hopper embodying the present invention will now be described in more detail with reference to Figs. 14 through 17 (in which the reference numerals used do not correspond to those used in Figs. 4 to 8 or 9 to 13). One example is shown in Figs. 14 and 15, in which each pool hopper 7 has a gate 7b for opening and closing a discharge port defined in a hopper body 7a and a link mechanism 7c for opening and closing the gate 7b. A pair of brackets 7d project laterally (radially inwardly with respect to the apparatus) from opposite sides of the hopper body 7a. Two parallel shafts 7e, 7f extend between the brackets 7d, the shafts being positioned out of horizontal alignment and being differently spaced from the hopper body 7a. Another example is shown in Figs. 16 and 17, in which each weighing hopper 9 has a pair of gates 9b, 9c, for opening and closing discharge ports defined in a hopper body 9a, and a link mechanism 9d for opening and closing the gates 9b, 9c. A pair of brackets 9e project laterally (radially inwardly with respect to the apparatus) from opposite sides of the hopper body 9a. Two parallel shafts 9f, 9g extend between the brackets 9e, the shafts being positioned out of horizontal alignment and being differently spaced from the hopper body 9a.

The pool hopper 7 of Figs. 14 and 15 is attached to a peripheral edge of a support table 2 (Fig. 14) to which a channel-shaped attachment member 13 is fastened by means of bolts 14. The attachment member 13 has opposing sides provided with respective upwardly opening recesses 13a and downwardly opening recesses 13b. The weighing hopper 9 of Figs. 16 and 17 is mounted on a weighing machine 8 to which there is fastened a channel-shaped attachment member 15 by means of bolts 16. The attachment member 15 is provided with upwardly opening recesses 15a and downwardly opening recesses 15b in respective opposing sides thereof. The pool hopper 7 is mounted on the support table 2 with the shaft 7e which is closest to the hopper body 7a, being received in the upwardly opening recesses 13a, and the shaft 7f, which is furthest from the hopper body 7a, being received in the downwardly opening recesses 13b. The weighing hopper 9 is mounted on the weighing machine 8 with the shaft 9f, which is closest to the hopper body 9a, being received in the upwardly opening recesses 15a, and the shaft 9g, which is furthest from the hopper body 9a, being received in the downwardly opening recesses 15b.

Operation of the foregoing pool and weighing hoppers will now be described with reference to Figs. 14 through 17. Articles are dispersively supplied from a dispersion table via supply troughs and pool hoppers 7 as batches into the weighing hoppers 9, and then weighed respectively by the weighing hoppers 9. An "optimum" combination of measured weights is selected for achieving a desired total weight. The selected articles which have been weighed are discharged from the weighing hoppers 9 into an inner chute or an outer chute of a collection chute when either the gate 9b or the gate 9c of each of the selected weighing hoppers 9 is opened in response to operation of a corresponding driver unit 10. The discharged articles are collected by the selected chute, and then supplied to a packaging apparatus (not shown) disposed below the collection chute. By opening the gates 7b of the pool hoppers 7 disposed above the weighing hoppers 9 in response to operation of the driver units, the weighing hoppers 9 from which the articles have been discharged are immediately supplied with fresh batches of articles in preparation for a next cycle of weighing operation.

The pool hopper 7 is supported by the two shafts 7e, 7f on the attachment member 13 secured to the peripheral edge of the support table 2. A moment exerted in the direction of the arrows X, X (Fig. 15) by the articles contained therein is borne by the attachment member 13 with the shafts 7e, 7f received in the upwardly opening recesses 13a and the downwardly opening recesses 13b. Thus, the pool hopper 7 can be supported firmly by means of the above-described simple construction against vibrations or wobbling movements, unless an external moment greater than the above-mentioned moment is applied in the direction opposite to that of the arrow X. The pool hopper 7 can nevertheless be detached with facility simply by tilting the pool hopper 7 in the direction of the arrow Y to take the shaft 7f out of the downwardly opening recesses 13b. The weighing hopper 9 can also be supported and dismounted in the same manner as described above.

The shafts 7f, 9g of the pool hopper 7 and the weighing hopper 9 respectively have smaller-diameter portions 7f', 9g' engaging in the recesses 13b, 15b in the attachment members 13, 15, for preventing the hoppers from being laterally shifted while being supported on the attachment member and the weighing machine.

As described above, hoppers embodying the present invention can be of a comparatively simple construction, and can be manufactured relatively inexpensively, in addition to being light in weight as compared with prior art hoppers. Furthermore, such hoppers can advantageously be supported in such a manner as to reduce the effects of vibrations and wobbling movements, and hence noise, on the weight signals, thereby permitting the accuracy of weighing operations to be increased.

In the case where an automatic weighing apparatus has hoppers each equipped with a pair of gates, link mechanisms for opening and closing the pair of gates may be mounted on the same outer side surface of the hopper body. In this case the width of the hopper body may be reduced as compared with an arrangement in which the link mechanisms are positioned respectively on the opposite outer side surfaces of the hopper body. With the hoppers arranged in a circular pattern, they can be comparatively closely spaced through the reduction of the width thereof, so that the automatic weighing apparatus can be smaller in overall size, or so that more hoppers and weighing machines can be included in the apparatus, thereby increasing the availability of combinations of weighing machines during weighing operations, and hence improving weighing accuracy.

By combining the above-described link and attachment mechanisms, to provide a hopper embodying both aspects of the present invention, certain parts thereof may be shared by those mechanisms, thereby further simplifying the construction of the hopper, and permitting further reduction in weight and cost of manufacture of the hopper. In addition, in a double-gate hopper certain parts of the respective link mechanisms of the hopper gates, such as a return spring for urging the gates to return to their closed position for example, may be shared. Furthermore, by providing weighing hoppers with such link and attachment mechanisms, any high-frequency vibrations caused by charging of articles to be weighed into the lightweight hoppers can be attenuated, or substantially prevented from being transmitted to the weighing machines, which can then be stabilized in a relatively short period of time, thereby improving the accuracy and speed of the weighing operations.

## Claims

1. A hopper (7) for use in automatic weighing apparatus, which hopper is provided with a gate (18), pivotably attached to a body (13) of the hopper for movement between first and second dispositions in which the gate respectively closes and opens a discharge port (13a) of the hopper body, and with a link mechanism (19) operable to move the gate (18) from its first disposition to its second disposition, which link mechanism comprises: a drive link (20, 24, 25) pivotably mounted on a bracket (14) of the hopper (7), which bracket (14) projects from the hopper body (13) to serve for mounting the hopper (7) on a support device, so that the pivotal axis (Y) of the drive link (20, 24, 25) is spaced from the hopper body; and also comprises a follower link (21) fixed at one end portion (21b) thereof to the said gate (18) so as to be movable therewith, and having an opposite end portion (21a) pivotably connected to one end portion (22b) of an intermediate link (22) having an opposite end portion (22a) pivotably connected to a part (20a) of the said drive link (20, 24, 25), which part (20a) is spaced from the said pivotal axis (Y) of that drive link; the arrangement of the links being such that when the said gate (18) is in its first disposition the direction in which the said one end portion (22b) of the intermediate link (22) is spaced from its said opposite end portion (22a) is the same as that in which the said part (20a) of the drive link (20, 24, 25) is spaced from the said pivotal axis (Y) of that drive link; and the said gate (18) being movable then to its said second disposition by application of an actuating force to the said drive link (20, 24, 25) so as to rotate the said drive link about its said pivotal axis (Y) against the action of resilient retention means (23) effective between the hopper body (13) and the said drive link (20, 24, 25).

2. A hopper as claimed in claim 1, including a second gate (12a), pivotably attached to the body (16) of the hopper (11) for movement between first and second dispositions in which the second gate respectively closes and opens a second discharge port (16a) of the said hopper body (16), and a second such link mechanism (25), operable to move the said second gate (12a) from its first disposition to its second disposition, which second link mechanism (25) comprises: a second drive link (25c, 25d, 25g) pivotably mounted on the said bracket (18) of the hopper so that the pivotal axis (22) of the second drive link (25c, 25d, 25g) is spaced from the hopper body; and also comprises a second follower link (25a) fixed at one end portion thereof to the said second gate (12a) so as to be movable therewith, and having an opposite end portion pivotably connected to one end portion of a second intermediate link (25b) having an opposite end portion pivotably connected to a part (25c) of the said second drive link (25c, 25d, 25g), which part (25c) is spaced from the said pivotal axis (22) of that drive link; the arrangement being such that when the said second gate (12a) is in its first disposition the direction in which the said one end portion of the second intermediate link (25b) is spaced from its said opposite end portion is the same as that in which the said part (25c) of the second drive link (25c, 25d, 25g) is spaced from the said pivotal axis (22) of that drive link; and the said second gate (12a) being movable then to its said second disposition by application of an actuating force to the said second drive link (25c, 25d, 25g) so as to rotate the said second drive link about its said pivotal axis (22) against the action of resilient retention means (27) effective between the hopper body (16) and the said second drive link (25c, 25d, 25g).

3. A hopper as claimed in claim 2, wherein the resilient retention means (27) of claim 1 are common to both of the said link mechanisms (25, 26).

4. A hopper as claimed in claim 1, 2 or 3, including a second bracket (14) which projects from the hopper body (13) in the same direction as the bracket (14) of claim 1, respective end portions (14a) of the said brackets (14) which are remote from the said hopper body (13) being arranged so as to be spaced apart horizontally when the hopper is in use, and further including two mutually-parallel shafts (15, 16) which extend between the said respective end portions (14a) of the said brackets (14) at different distances from the hopper body (13); the shaft (15) wich is closer to the hopper body (13) being arranged to engage in an upwardly opening recess (26a) in a support device (26) whilst the other shaft (16) engages in a downwardly opening recess (26b) in the support device, thereby to retain the hopper on the said support device.

5. A hopper as claimed in claim 4, wherein one of the said shafts (15, 16) serves as the said pivotal axis (Y) of the said drive link (20, 24, 25).

6. A hopper as claimed in any preceding claim, wherein the said actuating force is applied to the said drive link (20, 24, 25) by drive means (10) of the weighing apparatus.

7. A hopper as claimed in any preceding claim, for use in automatic weighing apparatus as a pool hopper for holding, before weighing, a batch of articles to be weighed.

8. A hopper as claimed in any one of claims 1 to 6, for use in automatic weighing apparatus as a weighing hopper for holding a batch of articles to be weighed whilst weighing of those artioles is carried out.

**Patentansprüche**

1. Behälter (7) zur Verwendung in automatischen Wägevorrichtungen, mit einem Tor (18), das schwenkbar an einem Körper (13) des Behälters zur Bewegung zwischen einer ersten und einer zweiten Stellung befestigt ist, in welcher das Tor jeweils einen Auslaß-Port (13a) des Behälterkörpers schließt und öffnet, und mit einem Lenkermechanismus (19), der zum Bewegen des Tores (18) aus seiner ersten Stellung in seine zweite Stellung betätigbar ist, wobei der Lenkermechanismus umfaßt: einen schwenkbar an einem Arm (14) des Behälters (7) angebrachten Antriebslenker (20, 24, 25), wobei der Arm (14) von dem Behälterkörper (13) vorsteht, um den Behälter (7) an eine Stützvorrichtung anbringen zu können, so daß die Schwenkachse (Y) des Antriebslenkers (20, 24, 25) von dem Behälterkörper beabstandet ist; und ferner mit einem Folgerlenker (21), der an einem seiner Endbereiche (21b) derart an dem Tor (18) angebracht ist, daß er mit diesem bewegbar ist, und einen gegenüberliegenden Endbereich (21a) aufweist, der schwenkbar mit einem Endbereich (22b) eines Zwischenlenkers (22) verbunden ist, der einen gegenüberliegenden Endbereich (22a) aufweist, der schwenkbar mit einem von der Schwenkachse (Y) des Antriebslenkers beabstandeten Teil (20a) des Antriebslenkers (20, 24, 25) verbunden ist; wobei die Anordnung der Lenker derart ist, daß, wenn sich das Tor (18) in seiner ersten Stellung befindet, die Richtung, in welcher der genannte eine Endbereich (22b) des Zwischenlenkers (22) von seinem genannten gegenüberliegenden Endbereich (22a) beabstandet ist, dieselbe ist, wwie die, in welcher der Teil (20a) des Antriebslenkers (20, 24, 25) von der Schwenkachse (Y) dieses Antriebslenkers beabstandet ist; und wobei das Tor (18) danach durch Anwendung einer Betätigungskraft auf den Antriebslenker (20, 24, 25) in ihre zweite Stellung bewegbar ist, um den Antriebslenker um seine Schwenkachse (Y) entgegen der Wirkung federnder Rückhaltemittel (23) zu drehen, die zwischen dem Behälterkörper (13) und dem Antriebslenker (20, 24, 25) wirken.

2. Behälter nach Anspruch 1, mit einem zweiten Tor (12a), das schwenkbar an dem Körper (16) des Behälters (11) zur Bewegung zwischen einer ersten und einer zweiten Stellung befestigt ist, in welcher das zweite Tor jeweils einen zweiten Auslaß-Port (16a) des Behälterkörpers (16) schließt und öffnet, und mit einem zweiten Lenkermechanismus (25), der zum Bewegen des zweiten Tores (12a) aus seiner ersten Stellung in seine zweite Stellung betätigbar ist, wobei der zweite Lenkermechanismus (25) umfaßt: einen derart schwenkbar an dem Arm (18) des Behälters angebrachten zweiten Antriebslenker (25c, 25d, 25g), daß die Schwenkachse (22) des zweiten Antriebslenkers (25c, 25d, 25g) von dem Behälterkörper beabstandet ist; und ferner mit einem zweiten Folgerlenker (25a), der an einem seiner Endbereiche derart an dem zweiten Tor (12a) angebracht ist, daß er mit diesem bewegbar ist, und einen gegenüberliegenden Endbereich aufweist, der schwenkbar mit einem Endbereich eines zweiten Zwischenlenkers (25b) verbunden ist, der einen Endbereich aufweist, der schwenkbar mit einem von der Schwenkachse (22) des Antriebslenkers beabstandeten Teil (25c) des zweiten Antriebslenkers (25c, 25d, 25g) verbunden ist; wobei die Anordnung derart ist, daß, wenn sich das zweite Tor (12a) in seiner ersten Stellung befindet, die Richtung, in welcher der genannte eine Endbereich des zweiten Zwischenlenkers (25b) von seinem genannten gegenüberliegenden Endbereich beabstandet ist, dieselbe ist, wie die, in welcher der Teil (25c) des zweiten Antriebslenkers (25c, 25d, 25g) von der Schwenkachse (22) dieses Antriebslenkers beabstandet ist; und wobei das zweite Tor (12a) danach durch Anwendung einer Betätigungskraft auf den zweiten Antriebslenker (25c, 25d, 25g) in ihre zweite Stellung bewegbar ist, um den zweiten Antriebslenker um seine Schwenkachse (22) entgegen der Wirkung federnder Rückhaltemittel (27) zu drehen, die zwwischen dem Behälterkörper (16) und dem zweiten Antriebslenker (25c, 25d, 25g) wirken.

3. Behälter nach Anspruch 2, bei dem die federnden Rückhaltemittel (27) nach Anspruch 1 beiden der genannten Lenkermechanismen (25, 26) gemeinsam sind.

4. Behälter nach Anspruch 1, 2 oder 3, mit einem zweiten Arm (14), der von dem Behälterkörper (13) in der selben Richtung vorsteht, wie der Arm (14) nach Anspruch 1, jeweiligen Endbereichen (14a) der Arme (14), welche von dem Behälterkörper (13) entfernt und so angeordnet sind, daß sie horizontal voneinander beabstandet sind, wenn der Behälter in Gebrauch ist, und ferner mit zwei gegenseitig parallelen Wellen (15, 16), welche sich in verschiedenen Abständen zu dem Behälterkörper (13) zwischen den jeweiligen Endbereichen (14a) der Arme (14) erstrecken; wobei die dem Behälterkörper (13) nähere Welle (15) zum Eingriff in eine nach oben offene Aussparung (26a) in einer Stützvorrichtung (26) angeordnet ist, während die andere Welle (16) in eine nach unten offene Aussparung (26b) in der Stützvorrichtung eingreift, wodurch der Behälter an der Stützvorrichtung gehalten ist.

5. Behälter nach Anspruch 4, bei dem eine der Wellen (15, 16) als die Schwenkachse (Y) des Antriebslenkers (20, 24, 25) dient.

6. Behälter nach einem der vorhergehenden Ansprüche, bei dem die Betätigungskraft auf den Antriebslenker (20, 24, 25) durch Antriebsmittel (10) der Wägevorrichtung ausgeübt wird.

7. Behälter nach einem der vorhergehenden Ansprüche, zur Verwendung in einer automatischen Wägevorrichtung als Muldenbehälter zum Halten einer Charge zu wägender Artikel vor dem Wägen.

8. Behälter nach einem der Ansprüche 1 bis 6, zur Verwendung in einer automatischen Wägevorrichtung als Wägebehälter zum Halten einer Charge zu wägender Artikel, während das Wägen dieser Artikel durchgeführt wird.

**Revendications**

1. Trémie (7) pour l'utilisation dans un appareil de pesage automatique, laquelle trémie est munie d'une porte (18) fixée de manière pivotante à un corps (13) de la trémie en vue d'un mouvement entre une première position et une deuxième position dans lesquelles la porte ferme et ouvre respectivement une ouverture de déchargement (13a) du corps de trémie, et d'un mécanisme de lien (19) pouvant déplacer la porte (18) de sa première position à sa deuxième position, le mécanisme de lien comprenant: un lien de commande (20, 24, 25) monté de façon pivotante sur une fixation (14) de la trémie (7), laquelle fixation (14) fait saillie à partir du corps (13) de trémie pour servir au montage de la trémie (7) sur un dispositif de support, de sorte que l'axe de pivotement (Y) du lien de commande (20, 24, 25) est espacé du corps de trémie; et un lien-bielle (21) fixé par une portion d'extrémité (21b) à ladite porte (18) de manière à pouvoir être déplacé avec cette dernière, et relié de façon pivotante par la portion d'extrémité (21a) opposée à une portion d'extrémité (22b) d'un lien intermédiaire (22) dont la portion d'extrémité (22a) opposée est reliée de façon pivotante à une partie (20a) dudit lien de commande (20, 24, 25), la partie (20a) étant espacée dudit axe de pivotement (Y) de ce lien de commande et l'agencement des liens étant tel que, lorsque ladite porte (18) se trouve dans sa première position, la direction dans laquelle ladite portion d'extrémité (22b) du lien intermédiaire (22) est espacée de ladite portion d'extrémité (22a) opposée est la même que celle dans laquelle ladite partie (20a) du lien de commande (20, 24, 25) est espacée dudit axe de pivotement (Y) de ce lien de commande, et ladite porte (18) pouvant être déplacée ensuite à sa deuxième position par l'application d'une force d'actionnement audit lien de commande (20, 24, 25) de manière à faire tourner ledit lien de commande autour de son axe de pivotement (Y) contre l'action de moyens de retenue (23) élastiques agissant entre le corps (13) de trémie et ledit lien de commande (20, 24, 25).

2. Trémie selon la revendication 1, comprenant une deuxième porte (12a), fixée de manière pivotante au corps (16) de la trémie (11) en vue d'un mouvement entre une première position et une deuxième position dans lesquelles la deuxième porte ferme et ouvre respectivement une deuxième ouverture de déchargement (16a) dudit corps (16) de trémie, et un deuxième mécanisme de lien (25) pouvant déplacer ladite deuxième porte (12a) de sa première position à sa deuxième position, le deuxième mécanisme de lien (25) comprenant: un deuxième lien de commande (25c, 25d, 25g) monté de façon pivotante sur ladite fixation (18) de la trémie, de sorte que l'axe de pivotement (22) du deuxième lien de commande (25c, 25d, 25g) est espacé du corps de trémie; et un deuxième lien-bielle (25a) fixé par une portion d'extrémité à ladite deuxième porte (12a) de manière à pouvoir être déplacé avec cette dernière, et relié de façon pivotante par une portion d'extrémité opposée à une portion d'extrémité d'un lien intermédiaire (25b) dont la portion d'extrémité opposée est reliée de façon pivotante à une partie (25c) dudit deuxième lien de commande (25c, 25d, 25g), la partie (25c) étant espacée dudit axe de pivotement (22) de ce lien de commande et l'agencement étant tel que, lorsque ladite deuxième porte (12a) se trouve dans sa première position, la direction dans laquelle ladite portion d'extrémité du deuxième lien intermédiaire (25b) est espacée de ladite portion d'extrémité opposée est la même que celle dans laquelle ladite partie (25c) du deuxième lien de commande (25c, 25d, 25g) est espacée dudit axe de pivotement (22) de ce lien de commande, et ladite deuxième porte (12a) pouvant être déplacée ensuite à sa deuxième position par l'application d'une force d'actionnement audit deuxième lien de commande (25c, 25d, 25g) de manière à faire tourner ledit lien de commande autour de son axe de pivotement (22) contre l'action de moyens de retenue (27) élastiques agissant entre le corps (16) de trémie et ledit deuxième lien de commande (25c, 25d, 25g).

3. Trémie selon la revendication 2, caractérisée par le fait que les moyens de retenue (27) élastiques selon la revendication 1 sont communs aux deux mécanismes de lien (25, 26).

4. Trémie selon l'une des revendications 1, 2 ou 3, comprenant une deuxième fixation (14) qui fait saillie à partir du corps (13) de trémie dans la même direction que la fixation (14) selon la revendication 1, des portions d'extrémité (14a) respectives desdites fixations (14), qui se trouvent à distance dudit corps (13) de trémie, étant disposées de manière à être espacées l'une de l'autre horizontalement lorsque la trémie est utilisée, et comprenant par ailleurs deux arbres (15, 16) parallèles l'un à l'autre, qui s'étendent entre lesdites portions d'extrémité (14a) respectives desdites fixations (14) à des distances différentes du corps (13) de trémie, l'arbre (15) qui est plus près du corps (13) de trémie étant disposé de manière à s'engager dans une encoche (26a) ouverte vers le haut d'un dispositif de support (26), tandis que l'autre arbre (16) s'engage dans une encoche (26b) ouverte vers le bas du dispositif de support, retenant ainsi la trémie sur ledit dispositif de support.

5. Trémie selon la revendication 4, caractérisée par le fait que l'un desdits arbres (15, 16) sert d'axe de pivotement (Y) audit lien de commande (20, 24, 25).

6. Trémie selon l'une quelconque des revendications précédentes, caractérisée par le fait que ladite force d'actionnement est appliquée audit lien de commande (20, 24, 25) par des moyens d'actionnement de l'appareil de pesage.

7. Trémie selon l'une quelconque des revendications précédentes pour l'utilisation dans un appareil de pesage automatique en tant que trémie de réserve contenant avant le pesage un lot d'objets à peser.

8. Trémie selon l'une quelconque des revendications 1 à 6 pour l'utilisation dans un appareil de pesage automatique en tant que trémie de pesage contenant un lot d'objets à peser pendant le pesage de ces objets.

# Fig. 1

1

EP 0 106 613 B1

# Fig. 2

# Fig. 3

# Fig.4

# Fig. 5

EP 0 106 613 B1

# Fig. 6

# Fig. 7

# Fig. 8

EP 0 106 613 B1

Fig. 9

# Fig. 10

EP 0 106 613 B1

# Fig. 11

# Fig. 12

# Fig. 13

# Fig. 14

# Fig. 15

Fig. 16

# Fig. 17